# FASCICULE DE BREVET EUROPEEN

(11) **EP 2 760 741 B1**
(45) Date de publication et mention de la délivrance du brevet: **16.11.2016**
(21) Numéro de dépôt: 12767046.1
(22) Date de dépôt: 07.09.2012
(51) Int. Cl.: B64D 15/12, B64D 33/02, H05B 3/84

(54) **ENSEMBLE DE LÈVRE POUR NACELLE DE TURBORÉACTEUR À DÉGIVRAGE ÉLECTRIQUE**
TRIEBWERKSGONDEL DEREN LIPPE MIT ELEKTRISCHEN ENTEISUNG AUSGESTATTET IST
POWER PLANT NACELLE LIP PROVIDED WITH AN ELECTRIC DE-ICING SYSTEM

(30) Priorité: 28.09.2011 FR 1158678
(43) Date de publication de la demande: 06.08.2014
(73) Titulaire: Aircelle, 76700 Gonfreville L'Orcher (FR)
(72) Inventeur: PEREIRA, David, F-78180 Montigny-le-Bretonneux (FR); DUNAND, Michel, F-31130 Balma (FR)
(74) Mandataire: Gaillarde, Frédéric F. Ch.
(86) Numéro de dépôt international: PCT/FR2012/052006
(87) Numéro de publication internationale: WO 2013/045783

(56) Documents cités:
- EP-A1- 1 715 159
- WO-A2-2006/136748
- GB-A- 2 432 409
- US-A1- 2008 179 448

## Description

La présente invention se rapporte à un élément chauffant pour dispositif de dégivrage électrique équipant une nacelle de turboréacteur.

Un avion est propulsé par un ou plusieurs ensemble propulsifs comprenant chacun un turboréacteur logé dans une nacelle sensiblement tubulaire. Chaque ensemble propulsif est rattaché à l'avion par un mât situé généralement sous une aile ou au niveau du fuselage de l'avion.

Une nacelle présente de manière générale, une structure sensiblement tubulaire entourant le turboréacteur et comprend, une entrée d'air en amont du moteur, une section médiane destinée à entourer une soufflante dudit turboréacteur et une section aval entourant la chambre de combustion du turboréacteur et qui peut être équipée de moyens d'inversion de poussée.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de soufflante. L'ensemble est rattaché en amont d'un carter de soufflante appartenant à la section médiane de l'ensemble.

En vol, selon les conditions de température, de pression et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante.

Une solution pour dégivrer ou déglacer la surface externe consiste à éviter que de la glace ne se forme sur cette surface externe en maintenant la surface concernée à une température suffisante.

Ainsi, il est connu par exemple du document US 4 688 757, de prélever de l'air chaud au niveau du compresseur du turboréacteur et de l'amener au niveau de la lèvre d'entrée d'air afin de réchauffer les parois. Toutefois, un tel dispositif nécessite un système de conduits d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaitable.

Ces inconvénients ont pu être palliés en recourant à des systèmes de dégivrage électriques.

On pourra notamment citer le document EP 1 495 963 bien que de nombreux autres documents, comme US 2008179448 A1, se rapportent au dégivrage électrique et à ses développements.

La mise en oeuvre d'un dispositif de dégivrage électrique utilise des ensembles de résistances chauffantes, également appelés tapis chauffants, implantés au niveau de la lèvre d'entrée d'air à proximité de la surface externe et alimentés électriquement par une alimentation électrique généralement triphasée.

Un inconvénient de tels systèmes est qu'ils sont situés dans une zone de la nacelle particulièrement exposée aux effets directs les plus sévères de la foudre. Cela entraîne des courants induits dans le dispositif et les tapis chauffants qui son particulièrement élevés. Ces courants induits se propagent à travers les harnais d'alimentation du système et peuvent endommager fortement les équipements du système.

La présente invention vise à pallier ces inconvénients et se rapporte pour ce faire à un ensemble de lèvre d'une nacelle de turboréacteur selon la revendication 1.

En effet, il est apparu que les montages traditionnels, et notamment les montages en étoile ou triangle d'alimentation triphasée, entraînaient la formation de nombreuses boucles locales conductrices qui amplifient les courants induits susceptibles de traverser l'ensemble.

En proposant que chaque conducteur d'alimentation est associé à un conducteur neutre et sont regroupés, les conducteurs de phase et neutre sont toujours côte à côte et ainsi la surface des boucles formées par les différents conducteurs est minimisée et extrêmement réduite. Les courants électriques induits en sont donc fortement diminués et il est possible de simplifier et dimensionner en conséquence les composants anti-foudre.

De manière avantageuse, l'élément électrique chauffant est alimenté en courant alternatif, préférentiellement triphasé.

Préférentiellement, chaque phase est bifilaire comprenant un conducteur de phase et un conducteur neutre ou « terre ». Les fils électriques pourront être torsadés ou non.

Avantageusement, l'élément électrique chauffant possède au moins un côté et les conducteurs d'alimentation et neutre sont disposés sur ce même côté.

Selon un mode préféré de réalisation, l'élément chauffant est un tapis ou ruban chauffant.

Avantageusement, l'élément chauffant comprend au moins un serpentin résistif disposé entre un conducteur d'alimentation et son conducteur neutre associé. Avantageusement encore, le serpentin résistif est disposé selon au moins deux pistes en serpentin.

Préférentiellement, les deux pistes sont sensiblement parallèles.

Préférentiellement encore, le serpentin s'étend sensiblement le long d'une longueur de l'élément chauffant.

La présente invention se rapporte également à une nacelle de turboréacteur, caractérisée en ce qu'elle comprend un ensemble de lèvre d'entrée d'air selon l'invention.

La présente invention sera mieux comprise à la lumière de la description détaillée qui suite en regard du dessin annexé dans lequel :
La figure 1 est une représentation schématique d'un ensemble d'éléments chauffant arrangés sur la périphérie d'une lèvre d'entrée d'air et alimentés par un réseau triphasé monté en étoile selon l'art antérieur.
La figure 2 est une représentation schématique d'un ensemble d'éléments chauffant arrangés sur la périphérie d'une lèvre d'entrée d'air et alimentés par un réseau triphasé monté selon l'invention.
La figure 3 est une représentation schématique d'un élément chauffant selon l'invention équipant un ensemble tel que représenté à la figure 2.

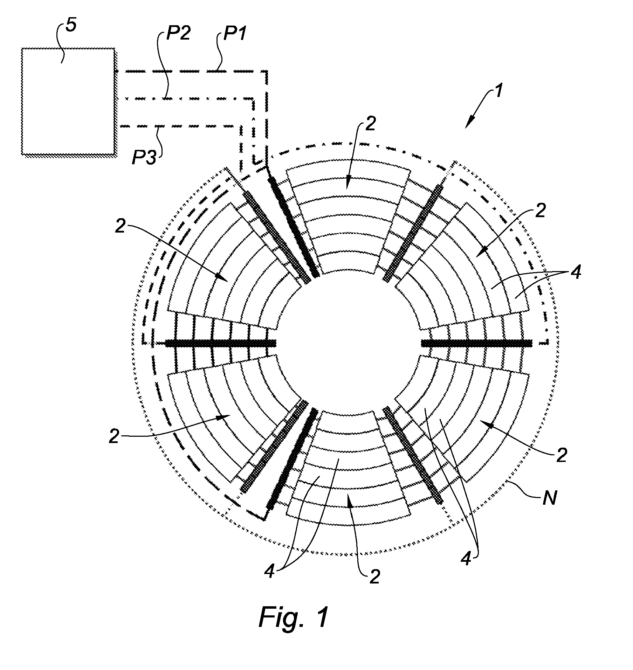

Comme représenté schématiquement sur la figure 1, un ensemble système de dégivrage 1 équipant un ensemble de lèvre d'entrée d'air d'une nacelle de turboréacteur comprend une pluralité, ici six, de groupes 2 d'éléments électriques chauffants 4 régulièrement disposés sur la périphérie de l'entrée d'air, chaque groupe 2 d'éléments électrique chauffants 4 comprenant lui-même une pluralité d'éléments électriques chauffants 4 disposés radialement (ici six éléments chauffants 4 par groupe 2).

L'ensemble de dégivrage 1 est alimenté par une source d'alimentation triphasée 5 comprenant un conducteur d'une première phase P1 (- -), d'une deuxième phase P2 (-·-), et d'une troisième phase P3(- - -),. L'alimentation comprend également un connecteur neutre N (········).

Chaque groupe 2 et élément chauffant 4 dudit groupe est relié d'une part à un connecteur de phase P1, P2 ou P3, et d'autre part, au conducteur neutre N.

Classiquement, la figure 1 montre un montage en étoile du système de dégivrage 1 conformément à l'art antérieur.

Dans une telle configuration, l'alimentation électrique traverse les éléments chauffants 4, le conducteur de phase P1, P2, P3 entrant d'un côté dudit élément 4 et ressortant au neutre N par un côté opposé.

Les conducteurs neutre sont reliés entre eux et forment un neutre flottant.

Comme expliqué précédemment, un tel schéma de montage entraîne la formation de nombreuses boucles inductrices couvrant une surface importante du système de dégivrage 1.

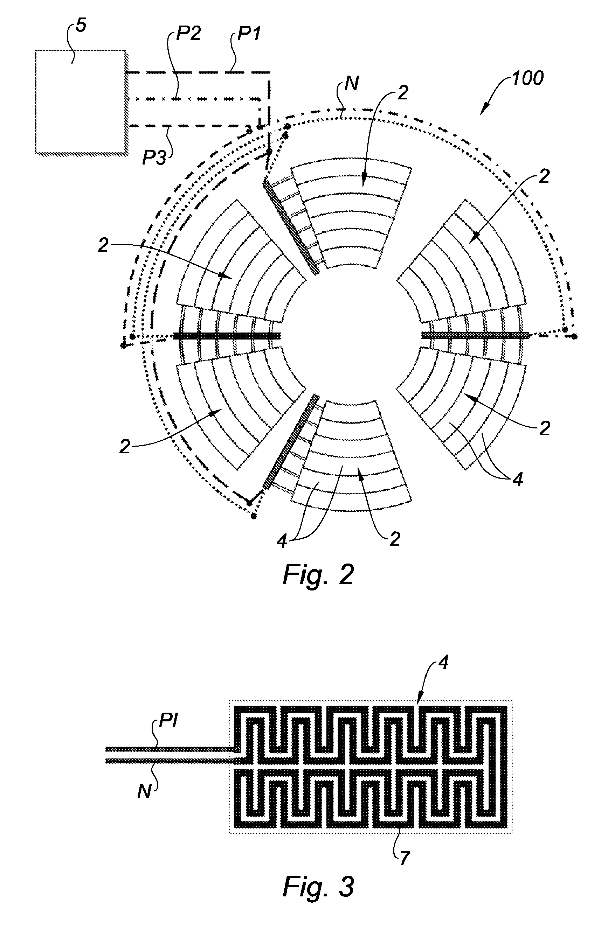

La figure 2 montre un schéma de montage selon l'invention d'un système de dégivrage 10.

Le montage de la figure 2 diffère du montage en étoile selon l'art antérieur par le fait que pour chaque élément chauffant 4, le conducteur de phase P1, P2, P3 est regroupé du même côté et à proximité du conducteur neutre N.

Avantageusement, les entrées et sorties d'alimentation des éléments chauffant sont bifilaires comprenant un conducteur de phase P1, P2, P3 et un conducteur neutre N.

Il ressort clairement de la figure 2 que les boucles inductrices susceptibles d'être formées sont, d'une part, moins nombreuses, et d'autre part, offrent une surface réduite.

La figure 3 illustre un élément chauffant 4 équipant de manière avantageuse le système de dégivrage 100.

L'élément chauffant 4 se présente sensiblement sous la forme d'un tapis, ou d'une bande rectangulaire à l'intérieur de laquelle circule un élément résistif chauffant 7 formant un serpentin.

Contrairement à l'art antérieur, l'élément résistif chauffant ne forme plus un serpentin traversant l'élément chauffant 4 qui présentait un élément conducteur P1, P2, P3 et un conducteur neutre N sur des côtés opposés, mais présente un serpentin qui est arrangé de manière à former deux pistes sensiblement parallèles le long de l'élément chauffant 4.

Un tel arrangement permet de réduire considérablement la surface de boucle inductrice formée par le serpentin.

L'optimisation du câblage du serpentin en plus de l'optimisation du câblage du système de dégivrage précédemment présenté permet de diminuer et surtout de ne pas sur dimensionner la taille des composants de protection anti-foudre qui sont présents dans les différents organes électriques de la nacelle et de l'aéronef.

Plus précisément, un tel agencement peut être qualifié de « différentiel » dans la mesure où un courant induit générant une perturbation circule de façon sensiblement identique sur les deux connecteurs de phase P1, P2, P3 et neutre N et dans l'élément chauffant 4. Les effets indirects des courants induits par la foudre dans le système de dégivrage en sont grandement minimisés.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble de lèvre d'une nacelle de turboréacteur équipé d'au moins un système de dégivrage électrique (10) comprenant au moins un élément électrique chauffant (4) alimenté électriquement par l'intermédiaire d'au moins un conducteur d'alimentation (P1, P2, P3), **caractérisé en ce que** chaque conducteur d'alimentation est associé à un conducteur neutre (N) ou « terre » disposé de manière regroupée à proximité du conducteur d'alimentation correspondant, et **en ce que** chaque phase est bifilaire comprenant un conducteur de phase (P1, P2, P3) et un conducteur neutre (N) ou « terre ».

2. Ensemble de lèvre selon la revendication 1, **caractérisé en ce que** l'élément électrique chauffant (4) est alimenté en courant alternatif, préférentiellement triphasé (5).

3. Ensemble de lèvre selon l'une quelconque des revendications 1 et 2, **caractérisé en ce que** l'élément électrique chauffant (4) possède au moins un côté et les conducteurs d'alimentation (P, N) et neutre sont disposés sur ce même côté.

4. Ensemble de lèvre selon l'une quelconque des revendications 1 à 3, **caractérisé en ce que** l'élément électrique chauffant (4) est un tapis ou ruban chauffant.

5. Ensemble de lèvre selon l'une quelconque des revendications 1 à 4, **caractérisé en ce que** l'élément électrique chauffant (4) comprend au moins un serpentin (7) résistif disposé entre un conducteur d'alimentation (P) et son conducteur neutre (N) associé.

6. Ensemble de lèvre selon la revendication 5, **caractérisé en ce que** le serpentin (7) résistif est disposé selon au moins deux pistes en serpentin.

7. Ensemble de lèvre selon la revendication 6, **caractérisé en ce que** les deux pistes sont sensiblement parallèles.

8. Ensemble de lèvre selon l'une quelconque des revendications 5 à 7, **caractérisé en ce que** le serpentin (7) s'étend sensiblement le long d'une longueur de l'élément électrique chauffant (4).

9. Nacelle de turboréacteur, **caractérisée en ce qu'**elle comprend un ensemble de lèvre d'entrée d'air selon l'une quelconque des revendications 1 à 8.

## Patentansprüche

1. Lippenanordnung einer Triebwerksgondel, die mit mindestens einem elektrischen Enteisungssystem (10) ausgestattet ist, das mindestens ein elektrisches Heizelement (4) umfasst, das elektrisch über mindestens einen Versorgungsleiter (P1, P2, P3) versorgt ist, **dadurch gekennzeichnet, dass** jeder Versorgungsleiter mit einem Nullleiter (N) oder "Erdungsleiter" assoziiert ist, der in der Nähe des entsprechenden Versorgungsleiters gruppiert angeordnet ist, und dass jede Phase zweiadrig ist, wobei sie einen Phasenleiter (P1, P2, P3) und einen Nullleiter (N) oder "Erdungsleiter" umfasst.

2. Lippenanordnung nach Anspruch 1, **dadurch gekennzeichnet, dass** das elektrische Heizelement (4) mit Wechselstrom, vorzugsweise mit Drehstrom (5) versorgt ist.

3. Lippenanordnung nach einem der Ansprüche 1 und 2, **dadurch gekennzeichnet, dass** das elektrische Heizelement (4) mindestens eine Seite besitzt und die Versorgungsleiter (P, N) und Nullleiter auf dieser Seite angeordnet sind.

4. Lippenanordnung nach einem der Ansprüche 1 bis 3, **dadurch gekennzeichnet, dass** das elektrische Heizelement (4) eine Heizmatte oder ein Heizband ist.

5. Lippenanordnung nach einem der Ansprüche 1 bis 4, **dadurch gekennzeichnet, dass** das Heizelement (4) mindestens eine resistive Heizschlange (7) umfasst, die zwischen einem Versorgungsleiter (P) und seinem assoziierten Nullleiter (N) angeordnet ist.

6. Lippenanordnung nach Anspruch 5, **dadurch gekennzeichnet, dass** die resistive Heizschlange (7) entlang von mindestens zwei Bahnen in Heizschlangenform angeordnet ist.

7. Lippenanordnung nach Anspruch 6, **dadurch gekennzeichnet, dass** die zwei Bahnen im Wesentlichen parallel sind.

8. Lippenanordnung nach einem der Ansprüche 5 bis 7, **dadurch gekennzeichnet, dass** sich die Heizschlange (7) im Wesentlichen entlang einer Länge des elektrischen Heizelements (4) erstreckt.

9. Triebwerksgondel, **dadurch gekennzeichnet, dass** sie eine Lufteintritts-Lippenanordnung nach einem der Ansprüche 1 bis 8 umfasst.

## Claims

1. A lip assembly of a turbojet engine nacelle equipped with at least one electric de-icing system (10) comprising at least one electric heating element (4) electrically supplied by means of at least one supply conductor (P1, P2, P3), **characterized in that** each supply conductor is associated with a neutral (N) or "earth" conductor disposed in a gathered manner close to the corresponding supply conductor, and **in that** each phase is a two-wire phase comprising a phase conductor (P1, P2, P3) and a neutral (N) or "earth" conductor.

2. The lip assembly according to claim 1, **characterized in that** the electric heating element (4) is supplied with alternating current (5), preferably three-phase alternating current.

3. The lip assembly according to any one of claims 1 and 2, **characterized in that** the electric heating element (4) has at least one side and the neutral and supply conductors (P, N) are disposed on the same side.

4. The lip assembly according to any one of claims 1 to 3, **characterized in that** the electric heating element (4) is a heating mat or ribbon.

5. The lip assembly according to any one of claims 1 to 4, **characterized in that** the electric heating element (4) comprises at least one resistive coil (7) disposed between a supply conductor (P) and its associated neutral conductor (N).

6. The lip assembly according to claim 5, **characterized in that** the resistive coil (7) is disposed according to at least two coil tracks.

7. The lip assembly according to claim 6, **characterized in that** the two tracks are substantially parallel.

8. The lip assembly according to any one of claim 5 to 7, **characterized in that** the coil (7) extends substantially over a length of the electric heating element (4).

9. A turbojet engine nacelle, **characterized in that** it comprises a set of air inlet lip according to any one of claims 1 to 8.
